# EUROPEAN PATENT SPECIFICATION

(11) **EP 2 863 730 B1**
(45) Date of publication and mention of the grant of the patent: **23.05.2018**
(21) Application number: 13731146.0
(22) Date of filing: 25.06.2013
(51) Int. Cl.: A01F 15/07

(54) **A COMBINED BALER AND BALE WRAPPING APPARATUS AND A BALE WRAPPING APPARATUS**
KOMBINIERTE BALLENPRESS- UND -WICKELVORRICHTUNG SOWIE BALLENWICKELVORRICHTUNG
APPAREIL COMBINÉ DE FORMATION ET D'EMBALLAGE DE BALLES, ET APPAREIL D'EMBALLAGE DE BALLES

(30) Priority: 26.06.2012 IE 20120292
(43) Date of publication of application: 29.04.2015
(73) Proprietor: Kverneland Group Ravenna S.r.l., 48026 Russi (RA) (IT)
(72) Inventor: VARLEY, Seamus, Kimmage Dublin 6W (IE)
(74) Representative: Bittner, Thomas L.
(86) International application number: PCT/EP2013/063269
(87) International publication number: WO 2014/001330

(56) References cited:
- EP-A1- 1 077 024
- EP-A1- 2 292 084
- WO-A1-2006/093374
- DE-A1- 4 208 091
- IT-B- 1 225 741
- US-A1- 2004 083 905
- US-A1- 2010 024 357
- US-B1- 6 679 035

## Description

The invention relates to a combined baler and bale wrapping apparatus, and a construction kit.

### Background

Baling of a fibrous substance takes place using a baling apparatus (baler) which forms the bale. When the baling apparatus has produced a bale of a particular size, a number of layers of material is applied around the circumference of the bale in order to maintain its shape prior to the next stage of wrapping a material around the bale, e.g. a plastic material.

There are two types of bale wrapping apparatus known on the market. These bale wrapping apparatus are widely referred to as stand-alone bale wrapping apparatus and baler combination systems, respectively.

In stand-alone bale wrapping systems, a baling apparatus firstly forms the bale and applies a mesh, plastic or twine material to the bale and passes the bale from the bale forming chamber directly onto the ground. The stand-alone bale wrapping apparatus then comes along, usually attached to a tractor, and removes the bale from the ground and transfers the bale onto its supporting table in order to apply the plastic material around the bale.

The combination system combines the two processes of baling and bale wrapping together in one apparatus. The two units are usually mounted on a single chassis though there are systems available that have a pivot point between the baling apparatus (also referred to herein as "baler") and the bale wrapping apparatus (also referred to herein as "bale wrapper") making the combination apparatus articulated. The combination systems currently available have one of two known types of wrapping systems; one known wrapping system rotates the bale around a single axis while the plastic dispensers are rotated separately about a second axis, the dispensers can be rotated about the vertical plane or horizontal plane. The second known wrapping system has a supporting table which rotates the bales on two axes while the two plastic dispensers remain in a fixed position. The disadvantage of the second bale wrapping system is that the bale will be more unstable during the bale wrapping cycle as the bale is rotating about two axes.

The advantage with combination systems is that the two, usually separate operations can be now carried out by a single operator and power unit such as, for example, a tractor. Combination systems generally use some form of transfer mechanism to transfer the bale of fibrous material from the bale forming chamber of the baling apparatus onto the bale supporting table for bale wrapping. These transfer mechanisms can be complicated and expensive to integrate into the baler/ bale wrapping unit.

In the examples of prior art given below, the transfer mechanisms also slow the baling and bale wrapping operations down. Also another disadvantage with current combination systems is when the operator using known combination systems, needs to bale fibrous material and not apply any plastic, the bale of material must always be transferred onto the bale wrapper and then be passed onto the ground in a sequence of movements by the machine.

Due to this unnecessary movement of the bale, the baler / baler wrappers hydraulic systems are in use, hence creating load on the systems power unit.

Document EP 2 292 084 A1 discloses an example of an integrated baler / bale wrapping unit. The transfer mechanism for transferring the bale from the bale forming chamber to the bale wrapper is integrated as part of the bale forming chamber. Disadvantages relating to this system are that to transfer the bale from the bale forming chamber to the bale wrapper, the bale forming chamber is split into two moveable parts, and in order to transfer the bale onto the bale wrapper, the bale forming chamber door opening system must extend upwards by an additional extension in order for its transfer mechanism to transfer the bale of fibrous material. This takes additional time compared with the conventional round baling apparatus. This lifting of the bale inside the chamber also creates extra unwanted stress on the bale forming chamber door opening system and the chamber door hinge points.

The transfer of the bale by the bottom tier of the bale forming chamber means that the trajectory of the bale is initially upwards followed by a pushing motion raising the bale upwards, means that the center of gravity of the machine is shifted to an unfavourable position especially if the machine is operating on the side of a slope as is often the case where fields are not entirely flat. This also means that while the bale is in motion, cross movement of the bale is more likely, hence a misalignment of the bale when delivered to the supporting table for subsequent bale wrapping.

Another disadvantage with the apparatus disclosed in EP 2 292 084 A1 arises due to the vertical wrapping ring formation of the bale wrapper; the bale wrapper's level is constrained by the wrapping ring's structure and must be permanently located at a high horizontal location which results in a high transfer level for the bale.

For the apparatus discussed in EP 2 292 084 A1, if the bale does not require plastic covering, the bale is still required to be passed onto the supporting table and, in a second movement, be passed onto the ground, this of course, puts unnecessary load onto the power plant driving the machine and hence gives rise to additional fuel consumption. The baler's wrapper is in a fixed position with the consequence that the machine's length cannot be altered for road transport. Due to the integrated bale transfer mechanism with the baler's chamber, the manufacturing of this specific chamber type limits the baler to the baler / baler wrapper combination, in other words, the baler cannot be manufactured in this configuration as a stand-alone baler.

A further example of prior art is the apparatus of document EP 1 266 563 A1 which has some of the same disadvantages as set out above. In this case, the transfer mechanism is separate from the bale forming chamber. During operation, the bale forming chamber door is opened and the bale moves onto the transfer mechanism. Due to the fact that the transfer mechanism is located between the bale forming chamber and the baler's wrapper, the transfer mechanism adds considerable length to the machine. Therefore in most examples of this type of machine, an additional axle with wheels is required to support the additional weight and imbalance by the machine's length.

Again with the apparatus of EP 1 266 563 A1, in the case of bales formed in the bale forming chamber and not requiring a plastic cover, the transfer mechanism is needed to transfer the bale onto the bale supporting table, and in another movement, the bale is off-loaded to the ground by the tilting downward of the bale supporting table. Again another disadvantage in common with the apparatus of EP 2 292 084 A1 mentioned the machines length for transport cannot be altered. Document DE 42 08 091 A1 discloses a combined baler and bale wrapping apparatus. Another machine is disclosed in DE 20 2005 008 468 U1. When the bale has been formed in the bale forming chamber, the chamber door opens and the bale is released onto the bale transfer mechanism which is located at a lower level, the bale forming chamber is unable to close until the transfer mechanism has transferred the bale onto the supporting table due to the fact that otherwise, the door of the bale forming chamber would collide with the bale as the door moves downwardly into the closed position. This means the whole process is slowed down considerably. The overall length of the baler / bale wrapper is considerably longer due to the transfer mechanism, the machine has a fixed length which cannot be altered for road transport; and, if wrapping of the bale in a plastic material is not required, the bale must be transferred onto the supporting table and then onto the ground by the lowering of the supporting table.

Also, in document EP 0 865 723 A1 a combined baler and bale wrapping apparatus is described. After being released from the baler, the bale is transferred to the bale wrapping device by a transport mechanism.

Document EP 1386 532 A1 discloses a wrapping apparatus comprising a plurality of wrapping material dispensers.

### Summary

It is an object of the invention to provide an improved bale wrapping technology for a combined baler and bale wrapping apparatus and a bale wrapping apparatus which overcomes the problems of the prior art.

According to one aspect, a combined baler and bale wrapping apparatus is provided. The combined baler and bale wrapping apparatus comprises a baler configured to form a bale from fibrous material, and a bale wrapping apparatus which is provided with a supporting frame. The supporting frame which may also be referred to as bale supporting frame is moveable between a closed position in which the supporting frame is adapted to receive the bale released from the baler and support the bale for wrapping with a wrapping material, and an open position in which the supporting frame is configured to allow the bale released from the baler to pass through the supporting frame without being held in or by the supporting frame.

The configuration of the bale wrapping apparatus may provide for a bale receive mode and a bale wrapping mode which eliminates the need for a transfer mechanism.

In the baler the bale may be formed in a bale forming chamber to which the fibrous material is provided, e.g. crop material or other agricultural stalk material. The baling chamber may be of a fixed chamber or a variable chamber. The bale may be formed as cylindrical bale.

The bale wrapping apparatus may be operatively allocated to the output of the baler from which the bale formed is released.

The supporting frame may provide a bale supporting table.

The closed position of the bale wrapping apparatus may also be referred to as an in-use bale wrapping position. Likewise, the open position of the bale wrapping apparatus may also be referred to as an out-of-use bale wrapping position. In the in-use or closed position the bale wrapping apparatus may have ground contact, e.g. by one or more rollers provided on the supporting frame. In an alternative embodiment, the bale wrapping apparatus is located free of ground contact in both the open and the closed position.

The bale wrapping apparatus may be detachably or non-detachably connected to an agriculture vehicle which in turn may be provided with the baler. The supporting frame may be detachably or non-detachably received on a single chassis of the combined baler and bale wrapping apparatus. The bale wrapping apparatus may be provided as an apparatus rearwardly projecting from one of the agriculture vehicle and the baler. As an alternative, the bale wrapping apparatus may be connected to a front part of the agriculture vehicle.

The bale wrapping apparatus may be combined with different types of baler which may be known as such. The bale wrapping apparatus may be connected to a baler as an upgrade to provide a combined baler and bale wrapping apparatus. The bale wrapping apparatus may be provided as a construction kit for upgrading a baler, e.g. a stand-alone baler, to a combined baler and bale wrapping system or apparatus. According to another aspect a construction kit for a bale wrapping apparatus is provided, the kit comprising construction elements for a supporting frame, the supporting frame, when mounted to the baler, being moveable between a closed position in which the supporting frame is adapted to receive the bale released from the baler and support the bale for wrapping with a wrapping material, and an open position in which the supporting frame is configured to allow the bale released from the baler to pass through the supporting frame without being held in or by the supporting frame. Such embodiment may be provided for a farming vehicle.

The supporting frame, at least in the closed position, encircles or encompasses a working space where the bale is placed for wrapping partially, e.g. on two or three sides, or totally on four sides by supporting frame members. Encompassing may be absent in the open position of the supporting frame, e.g. by displacing members of the supporting frame out of an encompassing position. Displacing may be done by pivoting members.

An encircling part of the supporting frame is essentially extending in a horizontal plane.

The supporting frame may be pivotably moveable between the closed and open position. A distal part of the supporting frame may be rotated for moving the supporting frame between the closed and open position. Depending on the location of the bale wrapping apparatus in relation to the vehicle or the baler to which it is functionally connected, the distal part of the frame may also be referred to as back part and front part, respectively. Moving the supporting frame into the open position will provide a passing through or transfer space through which the bale formed by the baler before may enter the supporting frame and / or through which the wrapped bale may be released. In case of the combined baler and wrapping apparatus, the bale released from the baler may pass through the space without being held in or by the supporting frame.

The bale released from the baler may be moved by gravity only into the bale wrapping apparatus. In an embodiment, the combined baler and bale wrapping apparatus may be free of any forcing transport mechanism. In other embodiments a transfer mechanism may be provided, the transfer mechanism being configured to facilitate moving the bale from the baler into the bale wrapping apparatus. The transfer mechanism may be provided as a push mechanism configured to push the bale formed from the baler into the bale wrapping apparatus. The transfer mechanism may combine with gravity-caused transport.

The supporting frame may comprise a first member and a second member, the second member being pivotably moveable relative to the first member. The bale supporting frame may be divided into the first member and the second member on a pivot point, e.g. approximately half way along the bale supporting frame, thereby enabling a back roller to pivot upwardly thereby moving the second member of the supporting frame into the open position for the bale of wrapped material to pass onto the ground. The second member may be provided as the distal part of the frame. A combination of the first and second members may be provided on opposite sides of the working space where the bale is placed for wrapping.

The bale wrapping apparatus may comprise at least one bale wrapping material dispenser for dispensing a bale wrapping material for applying around the bale. Two material dispenser means may be provided but, for example, due to the fact that the combined baler and bale wrapping apparatus can be of a continuous nature, the output of bales from the continuous baling and wrapping may significantly increase in number per hour. The continuous baling aspect of the operation could increase output up to and beyond 50 %. In such embodiment the output of the wrapping element of the operation will need to match this increased output. Therefore in order to keep up with the continuous baling element a number of dispenser means, e.g. plastic material means, may need to be increased to a number greater than two.

The at least one bale wrapping material dispenser may be mounted on at least one supporting arm connected to a rotatable structure mounted on the supporting frame. The rotatable structure may provide for rotation of the at least one bale wrapping material dispenser around an essentially horizontal axis on an essentially vertical plane for wrapping the bale.

The at least one bale wrapping material dispenser may be mounted on at least one supporting arm connected to a rotatable structure mounted on the second member of the supporting frame. The second member may be provided at the back (distal end) of the supporting frame.

The supporting frame may comprise at least one bale supporting roller for supporting the bale and / or for turning the bale during bale wrapping. The at least one bale supporting roller may be provided on a part of the supporting frame moved (relocated) when the supporting is moved between the open and closed position.

The at least one supporting roller may be provided on the second member of the supporting frame. A first bale supporting roller may be provided on the first bale supporting frame member. A second bale supporting roller may be provided on the second bale supporting frame member. The second bale supporting roller may support and / or rotate the bale. The material dispenser means may move and pivot together, thereby allowing the bale to be released from the bale wrapping apparatus onto the ground.

The bale wrapping apparatus may comprise a linkage system which provides an essential vertical movement to enable the supporting frame in the closed position and / or the open position to move in a generally vertical direction, between a bale receiving position and a bale wrapping position. The bale receive position may be at a low level to receive the bale by gravity from the baler. With respect to the bale wrapping apparatus not combined with the baler, the bale receive position, in combination with the open position of the supporting frame, may allow for the bale formed before to be received in the supporting frame, e.g. by picking-up the bale from ground. In a similar way, preferably in combination with the open position of the supporting frame, the bale receive position may allow to release the wrapped bale after wrapping procedure. The bale wrapping position may be at a higher level to allow or to facilitate the wrapping material dispensing means to rotate around the essentially horizontal axis on the essentially vertical plane. This may allow the wrapping apparatus to be located closest to the baler thereby allowing bale transfer onto the bale wrapping apparatus by gravity.

A framework of the bale wrapping apparatus may be provided outside of a pathway of the wrapping material dispensing means, hence providing an unobstructed pathway for the dispensing arms to travel in a substantially vertical path.

The material dispenser means may be attached to arms which are supported by a structure attached to an external ring of a slew ring. The use of nuts and bolts type connection may be provided. A circular plated structure may comprise of an external diameter and internal diameter cut out allowing for a center support shaft to pass through unobstructed beyond the line of rotation of the dispenser arms through to support the back wrapping roller and its structure. This arrangement of the slew ring, slew ring structure, wrapping dispenser arms structure, center support shaft and the back wrapping roller and back wrapping roller structure may allow the plastic dispenser means to rotate freely and unobstructed about predominately the vertical plane in order to apply a plastic material to the bale of fibrous material.

The material dispenser means may be attached to arms which are supported by a support structure attached to an external ring of a slew ring.

A structure of the bale wrapping apparatus may be connected to a main frame structure of the baler. The structure of the bale wrapping apparatus may be detachably or non-detachably connected to the main frame structure of the baler
The main frame structure of the baler and the structure of the bale wrapping apparatus may be connected together by a further linkage system, (Therefore different wording has to be used.) operated by at least one actuator such that the bale wrapping apparatus is enabled to move up and down, substantially on the vertical plane without hindering the bale wrapping material dispenser(s).

A structure framework for carrying the bale wrapping apparatus may be provided over wheels of the baler. The structure framework may be extended around a front part of the baler to transfer the weight from the bale wrapping apparatus to the front of the baler.

A ramp framework may be provided which is functionally allocated to a chamber door of the baler to provide a smooth pathway for the bale to move onto the supporting frame of the bale wrapping apparatus.

The back roller of the bale wrapper may be carried on a structural framework which may be connected to the bale wrappers main framework routed through the center of the slew ring in which the bale wrapping dispensers are attached to and rotate in a 360 degree pathway. The framework while supporting the front roller of the bale wrapper may also stiffen a main external framework of the bale wrapper.

The back roller and wrapper dispensers may act as one unit which pivots open to release the bale and also enables the wrapper to configure into an out of use mode (open position of the support frame) and allows bales to be released directly from the bale forming chamber (baler) onto the ground.

The bale wrappers framework may split on a pivot point approximately half way back along the bale wrappers external framework enabling the bale wrappers back roller to pivot up in order for the bale of wrapped material to pass onto the ground.

The bale wrapper may be able to move substantially up and down on the vertical plane without hindering the wrapping material dispenser(s). Therefore the requirement for a transfer mechanism may be eliminated. The bale wrapper may be located in a position as close as possible to the chamber of the baling apparatus (baler) hence enabling the baler to bear its weight on one axle with two or more wheels.

The bale wrapping apparatus (wrapper) may receive the bale at a very low horizontal level. The wrapper may be lowered into the bale receive position by the connecting linkage. In case of the combined baler and bale wrapping apparatus, the baler's chamber door can close immediately without the bale on the wrapper hindering its path. An additional advantage of this low horizontal level position of the bale wrapper when receiving the formed bale is that the center of gravity of the machine is kept at a favourable level for unkind hilly terrain. Another advantage of the low horizontal level for receiving the bale may be that the bale drops from a height and hence travels directly into the supporting table with a positive forward force without interruption along the way even on uphill situations.

The overall length of combined baler and bale wrapping apparatus and the wrapping apparatus may be kept to a minimum due to the absence of a transfer mechanism for transferring the bale from the baler to the bale wrapping apparatus. The linkage system may be configured to lower the bale wrapper into the wrapping position which is of vertical rotation of the plastic material on rotating arms.

If wrapping material is not required to be applied on the bale of fibrous material, the wrapping apparatus can be left in the open position. This means that the back roller may be left in the pivoted open position and, in case of the combined baler and bale wrapping apparatus, the bale can pass unhindered from the baler's chamber onto the first roller of the bale wrapping apparatus (wrapper) and then passes through the bale wrapping apparatus (wrapper) onto the ground. If the bale does not need to be wrapped in a material, the bale will not require to be passed onto the supporting frame. As the back roller can remain in the pivoted open position, the bale can pass through the supporting frame without having to be held and then passed to the ground.

The wrapper can be left in the open position for road transport which reduces the overall machine or vehicle length.

Due to the bale wrapper not requiring a transfer mechanism to transfer the bale of fibrous material to the bale wrapper, for the purpose of this application, the bale wrapper may be combined with a non-stop baler type and also a conventional baler type. These balers can be of the fixed chamber roller type or the variable chamber belt type.

When the baler is of a continuous nature, the output of bales from the baler may be significantly increased and must be wrapped at a time less than the time the continuous baler will produce them therefore this type of wrapper can accommodate a number of plastic dispensers greater than two.

The combined baler and bale wrapping apparatus may be mounted on an appropriate vehicle for example a tractor or any other suitable vehicle using the attached means.

A structure framework for carrying the bale wrapper may be provided over the baler's wheels and the framework can be extended around the front part of the baler to transfer the weight from the bale wrapper to the front of the baler.

A ramp framework may be provided under the baler chamber door to provide a smooth pathway for the bale to move onto the supporting frame.

The supporting frame may comprise a telescope mechanism for expanding and retracting the frame. The telescope mechanism may be provided with a telescopic section. Thereby, an adjustment of the supporting frame for bales of different size may be provided. The telescopic move may be horizontally. The supporting frame could move telescopically at an angle. Whichever option gives a required adjustment for the bale to sit in the best position on wrapping rollers. An option, the telescopic section of the supporting frame may not be required, and the adjustment required for the bales of different size may be executed using a higher pivoting point of the supporting frame and rotating the back of the supporting frame up to increase the clear dimension between the wrapping rollers in order for the larger or smaller than standard bale to sit centrally on the wrapping rollers. This may also result in the wrapping arms wrapping at an inclined angle to the vertical axis which could also be achieved. It may be envisaged that bales from about 1m to about 1.6 are to be catered for. The wrapper apparatus may be provided for to cater for larger again diameter bales that could be in excess of about 2m. These bales may not be wrapped but the wrapping apparatus could be adjusted to move the back roller and frame to allow these bales to pass through the supporting frame. It may be envisaged this will be achieved by the telescopic movement of the supporting frame or a higher up pivoting point to maximise the rotating diameter of the back frame and roller to clear the path.

### Description of embodiments

In the following, further embodiments will be described, by way of example, with reference to different embodiments. In the drawings show:
- Fig. 1: a cross sectional plan view of a combined baler and bale wrapping apparatus comprising a main framework of a continuous baler;
- Fig. 2: a cross section side view of the apparatus in Fig. 1 showing a chamber door of the baler in an open position and a bale passing down a bale ramp onto bale wrappers rollers for the start of a wrapping process;
- Fig. 3: a cross section side view of the apparatus in Fig. 1 showing continuous baler and the baler wrapper with the bale sitting in the bale wrapper after being passed from the baler and the baler's chamber door closed after;
- Fig. 3A: a sectional drawing showing dispenser arm and dispenser resting position when the combined wrapper is in a bale receive mode;
- Fig. 4: a cross section side view of Fig. 1 showing the continuous baler and bale wrapper raised into the bale wrapping position and wrapping has commenced. The wrapping material dispensers are in mid cycle located predominately in the vertical plane;
- Fig. 5: a cross section side view of Fig. 1 showing the continuous baler and bale wrapper at the completion of the wrapping cycle with the wrapping dispensers located predominately along the horizontal axis; and the back wrapping roller has pivoted to the open position in order for the bale to be passed onto the ground from the bale wrapper;
- Fig. 6: a cross section side view of the apparatus in Fig. 1 wherein the bale receive position is resumed, ready for the next bale to be released from the baler's bale forming chamber;
- Fig. 7: is a cross sectional side view of the apparatus in Fig. 1 in the open position. This open position of the bale wrapper can be selected if wrapping material is not needed to be applied to the fibrous bale material being released from the continuous baler;
- Fig. 8: a sectional front elevation view of a roller located at the back of the bale wrapper. Fig. 8 shows the wrapping roller, a framework supporting the roller, center support shaft protruding through the center of the slew ring mechanism to support the roller and the roller's framework;
- Fig. 9: a sectional plan view of the roller located at the back of the bale wrapper. Fig. 9 includes the back wrapping roller, supporting framework, center support shaft protruding through the center of the slew ring mechanism;
- Fig. 10 a: sectional side elevation of the roller located at the back of the bale wrapper. Fig. 10 includes the back wrapping roller, supporting framework, center support shaft protruding through the center of the slew ring mechanism;
- Fig. 11: sectional side elevation of the linkage system with a cylinder type actuator in the lowered position for receiving a bale from the baling apparatus (baler). Also shown in Fig. 11, is the framework for the front roller along with a cylinder type actuator for the pivoting of the back roller for passing the wrapped bale onto the ground;
- Fig. 12: sectional side elevation of the linkage system with a cylinder type actuator in the raised position for the wrapping of the bale in a plastic type material. Also shown is the framework for the front roller along with a cylinder type actuator for the tipping off cycle;
- Fig. 13: a cross section plan view of the bale wrapping apparatus combined with the main framework of a conventional baler type denoted 700;
- Fig. 14: a cross section side view of Fig. 1 showing the conventional balers chamber door in the open position and a bale discharging down the bale ramp onto the bale wrappers rollers for the start of the wrapping process;
- Fig. 15: a cross section side view of Fig. 1 showing the bale sitting in the bale wrapper after being passed from the baler and the conventional baler's chamber door closed after releasing the bale;
- Fig. 16: a cross section side view of Fig. 1 showing the conventional baler and the baler wrapper raised into the bale wrapping position and wrapping has commenced. The wrapping plastic dispensers are in mid cycle located predominately in the vertical plane;
- Fig. 17: a cross section side view of Fig. 1, the conventional baler and the baler wrapper showing the completion of the wrapping cycle with the wrapping dispensers located predominately along the horizontal axis and the back wrapping roller has pivoted to the open position in order for the bale to be passed onto the ground from the bale wrapper;
- Fig. 18: a cross section side view of Fig. 1 showing the conventional baler and baler wrapper back in the receive position ready for the next bale from the baler's bale chamber;
- Fig. 19: a cross section side view of Fig. 1 showing the conventional baler and baler wrapper in the open position. This position can be selected if wrapping material is not needed to be applied to the fibrous bale material;
- Fig. 20: a sectional front elevation showing a two dispenser type arrangement, this includes the back roller and framework 221 and 220 respectively. This roller framework is attached to the center support shaft 213. Behind the roller 221, framework 220, the dispenser arms 250a and 250 b respectively are attached by a nuts and bolts type of connection to the slew ring type mechanism 212;
- Fig. 21: a sectional plan view of the wrapper's table showing the back roller 221 and framework 220 attached to center support shaft 213. The center support shaft is connected through the center of the slew ring type mechanism back to the framework structure 214. Dispenser arms 250 a and 250b are attached to the slew ring 212;
- Fig. 22: a sectional front elevation showing a three dispenser type arrangement, this includes dispenser arms 250a, 250b and 250c respectively connected to slew ring type mechanism 212. Again the back roller 221 and roller framework 220 are connected back to the center shaft 213;
- Fig. 23: a sectional plan view of the wrappers table with a three dispenser layout. This layout shows dispenser arms 250a, 250b and 250c respectively connected to the slew ring type mechanism 212. The back roller 221 and rollers framework 220 are connected to center support shaft 213 which is directed through the center of the slew ring;

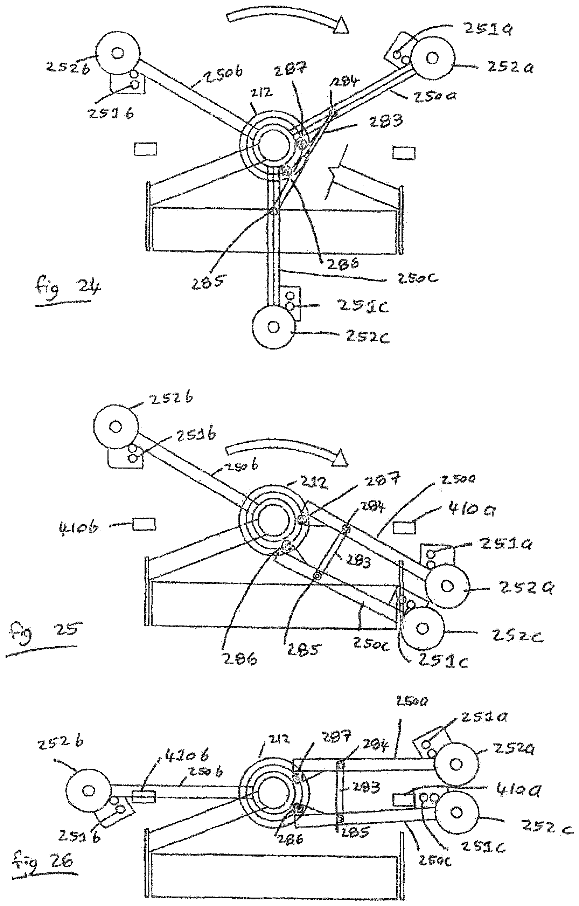

- Fig. 24: a sectional front elevation of the three type dispenser wrapper and the dispenser arm arrangement. Included in this sectional front elevation are the dispenser arms 250a, 250b and 250c respectively along with plastic material type dispensers 251a, 251b, and 251c respectively. Also attached to the dispensers are the plastic type material rolls 252a, 252b, and 252c respectively. The dispensers are attached to the slew ring type mechanism 212. Dispenser arms 250a and 250c have pivot points 286 and 287. The pivoting action of the arms is powered by an actuator of some kind 283 attached to the dispenser arms at pivot points 284 and 285;
- Fig. 25: a sectional front elevation of the three type dispenser wrapper and the dispenser arm arrangement with dispenser arms 250a and 250c folded back together so they are aligned with dispenser arm 250b at approximately 180 degrees for cut and tie operation of the plastic cutting and tying mechanisms 410a and 410b at the end of the wrapping cycle;
- Fig. 26: a sectional front elevation of the three type dispenser wrapper with the folding dispenser arms 250a and 250c folded together for the cutting and tying operation of the plastic type material after the bale wrapping operation. The three dispenser arrangement are back in position in order to receive the next bale onto the supporting table;
- Fig. 27: a schematic representation of a combined baler and bale wrapping apparatus, wherein the supporting frame of the bale wrapping apparatus is provided with a telescope section;
- Fig. 28: a schematic representation of the combined baler and bale wrapping apparatus in Fig. 27, wherein the telescope section is in an expanded or extended position;
- Fig. 29: a schematic representation of the combined baler and bale wrapping apparatus in Fig. 27, wherein the supporting frame of the wrapping apparatus is lifted up in a horizontal direction;
- Fig. 30: a schematic representation of the combined baler and bale wrapping apparatus in Fig. 27, wherein the telescope section is in a more expanded or extended position and the back section of the supporting frame is pivoted upwardly;
- Fig. 31: a plan view of a wrapping apparatus not combined with a baler;
- Fig. 32: a side elevation of the wrapping apparatus in Fig. 31;
- Fig. 33: a side elevation of the wrapping apparatus in Fig. 31 in a next stage;
- Fig. 34: a front sectional view of the wrapping apparatus in Fig. 31 in a bale receive and bale eject position;
- Fig. 35: a front sectional view of the wrapping apparatus in Fig. 31 in a closed position rolling and pushing the bale up onto rollers for raising into a wrap position; and
- Fig. 36: a front sectional view of the wrapping apparatus in Fig. 31 in a raised up position and in a bale wrapping mode with dispensers rotating about the horizontal axis and vertical plane to apply plastic to the bale of fibrous material.

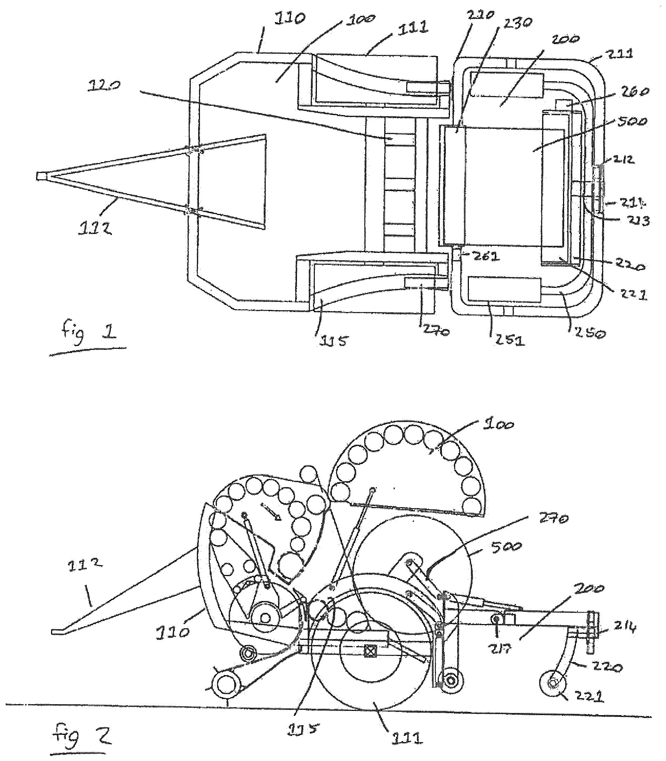

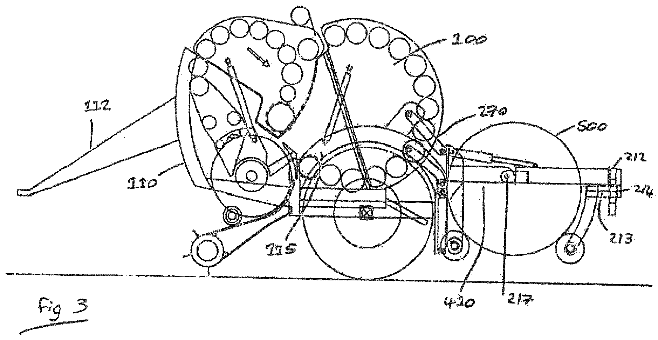

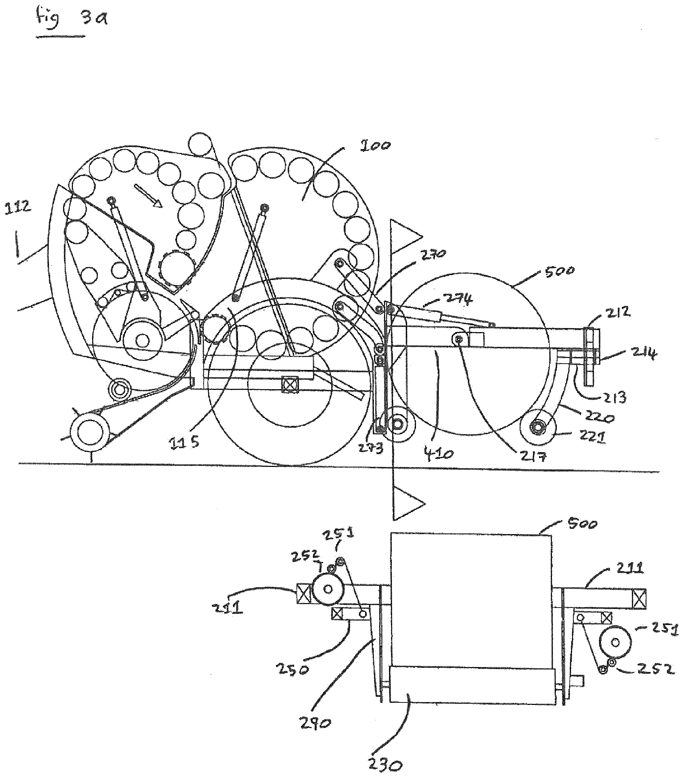

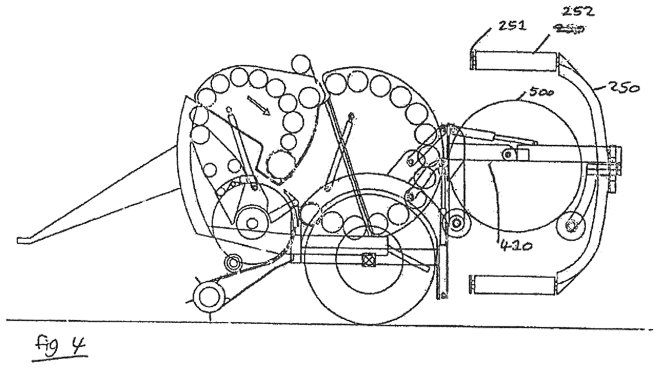

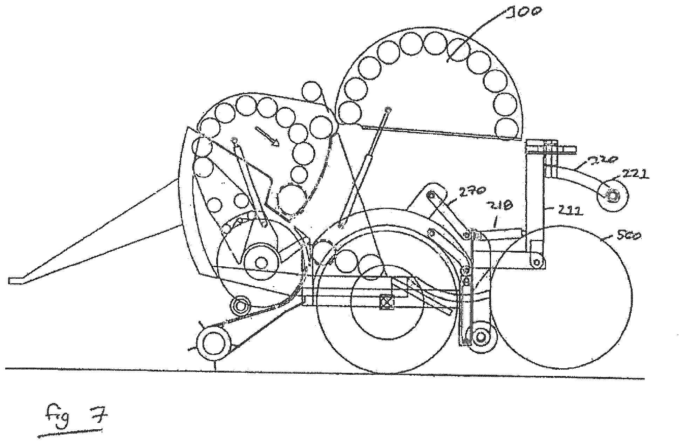

Referring to Fig. 1 to 7, a first embodiment of the combined baler and bale wrapping apparatus is shown in which the bale wrapping apparatus is attached to a continuous baling apparatus. The combined baler and bale wrapping apparatus is denoted generally by the reference numeral 200.

The combined baler and bale wrapping apparatus 200 comprises a supporting frame made of a plurality of construction elements as outlined below. The supporting frame may be of a generally rectangular shape and, in the embodiment shown, is connected to the baling apparatus 100 by a linkage system 270. The linkage system 270 is then connected to the framework 110 of the baling apparatus 100 via the wheel arch structure 115.

The baling apparatus frame 100 has a drawbar 112 fixed in order to provide a connection for a tractor or any other suitable machine. The baling apparatus frame 110 rests on an axle structure and has wheels 111 attached to support the weight of the combination baler/bale wrapping apparatus.

The baling apparatus frame 110 also has a ramp structure 120 attached to provide a smooth pathway for the bale of fibrous material to pass onto the balers wrapping apparatus.

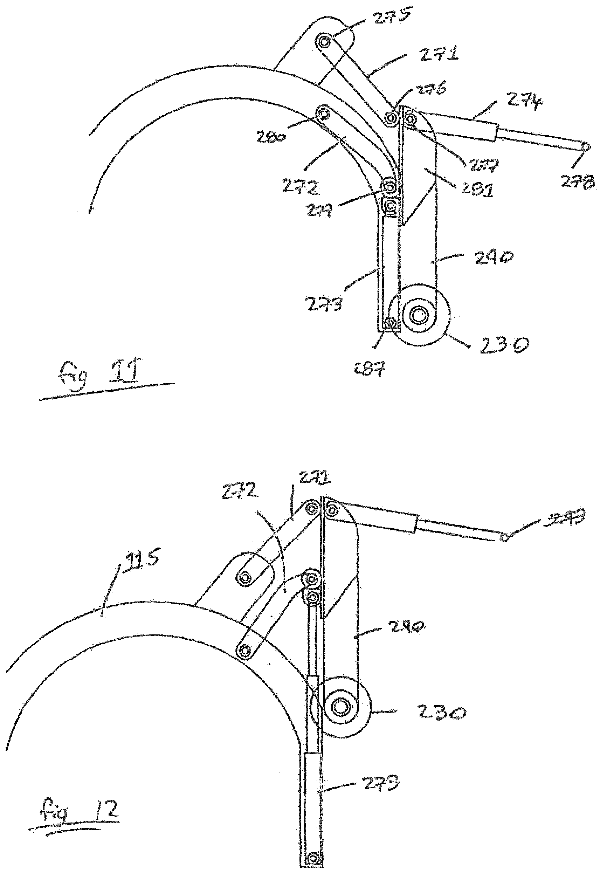

The linkage system 270 is detailed in Fig. 11 and Fig. 12. Fig. 11 shows the linkage system 270 in the lowered position for bale receive mode. The bale wrapper's frame is connected to the baler's frame 110 and the wheel arch structure 115 via fixed length linkage arms 271 and 272 through pivot points 275, 280, 276 and 279. The linkage actuator 273 for raising and lowering the wrapping apparatus is connected by a pivot pin connection 287 to the wheel arch structure 115. The passing of the wrapped bale onto the ground is controlled by actuator 274 connected by pivot pin connections 277 and 278 to the bale wrappers structure.

Fig. 12 shows the linkage system in the raised position for wrapping mode. The actuator 273 is shown in the extended position with link arms 271 and 272 raised.

The arrangement of this particular linkage, shown in Fig. 12 ensure the bale wrapper is raised predominately in the vertical axis hence maintaining a consistent distance the bale wrapping apparatus remains from the baler apparatus both in the higher wrapping position and the lower bale receive position. The passing of the wrapped bale is controlled by actuator 274 and is shown here in the extended position which translates to the bale being held between the rollers 221 and 230. The sequence of the wrapped bale in a plastic material or unwrapped bale will be described in greater detail at a later stage.

Fig. 1 shows a sectional plan view of the combined baler and bale wrapping apparatus, and Fig. 2 to 7 show sectional side elevations.

The supporting frame of the wrapping apparatus comprises of a number components. Starting from the front of the bale wrapper, at the linkage system 270 which is connected to a plated structure 281 which in turn is connected to a main front frame 210. The main front frame 210 is fixed; does not pivot about any axis but raises and lowers predominately on the vertical y axis plane. Attached to the main front frame 210 are two supporting framework legs 290 and attached to these legs structures 290 is a front roller 230. The main front frame 210 also comprises two pivot points for a back structure 211 to rotate on, e.g. through 90 degrees, this function of rotation allows the bale of wrapped or unwrapped fibrous material to be passed to the ground. Rotation is accomplished by means of an actor 218. The main front frame 210 also comprises of cut and hold functions 410 which are not detailed in order to allow clarity to the sectional elevations. The cut and hold mechanism holds and cuts the plastic at the end of each bale wrapping cycle.

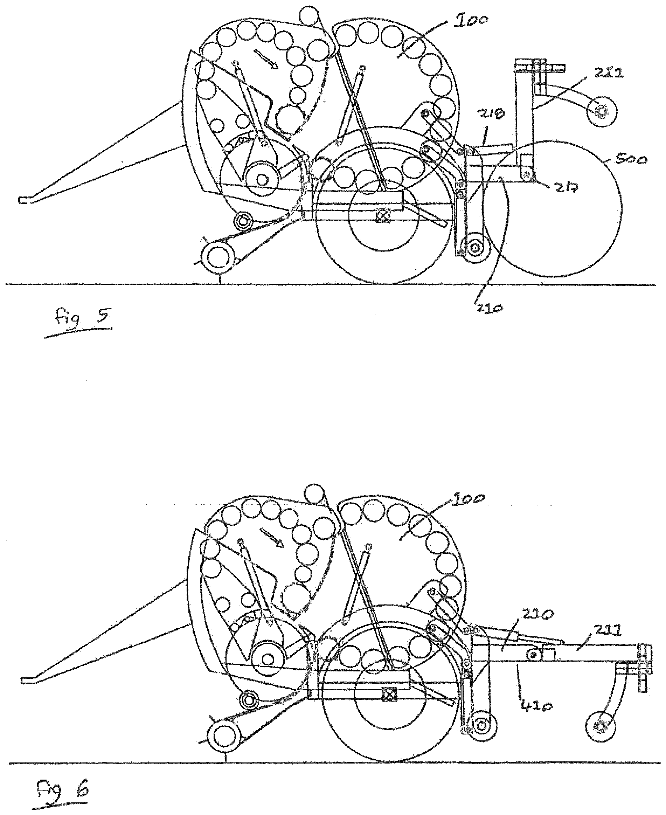

A working space where the bale 500 is placed for wrapping is encompassed by the front frame 210 and the back structure 211. The encompassing position is absent ("cancelled") when the back structure is pivoted in the upper position (cf. Fig. 5).

The legs structures 290 also have a drive means 261 attached in order to rotate the roller 230 which in turn rotates the bale 500. When the roller is not in rotation mode, the roller 230 is in a braked mode by the drive means in both rotational directions.

The back structure 211 of the bale wrapper folds around the back of the bale wrapper from the pivot points 217. A drive means comprising a cylinder type actuator 274, in this embodiment, raises and lowers the framework of the back structure 211 through pivot points 277 and 278 for the passing of the wrapped bale of fibrous material onto the ground. If the bale does not require a covering of plastic type material, the back structure 211 of the supporting frame of the bale wrapper is allowed to remain in the open position for the required amount of time while producing unwrapped bales.

The back structure 211 comprises of a plated structure 214 to enable a slew ring type mechanism to be attached or any other suitable mechanism to carry out the necessary task of rotating the plastic dispenser arms 250 around in a continuous 360 degrees rotation predominately in the vertical plane for the duration of the wrapping cycle.

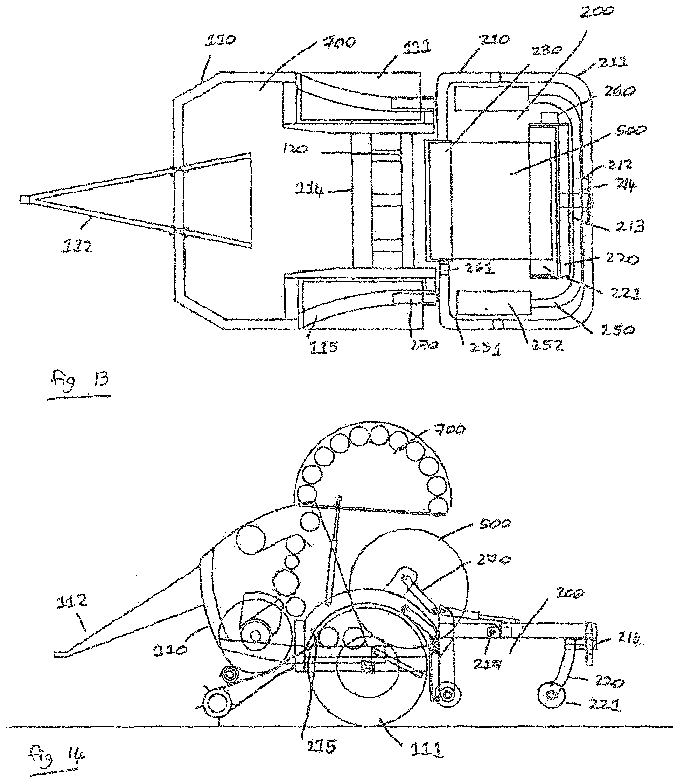

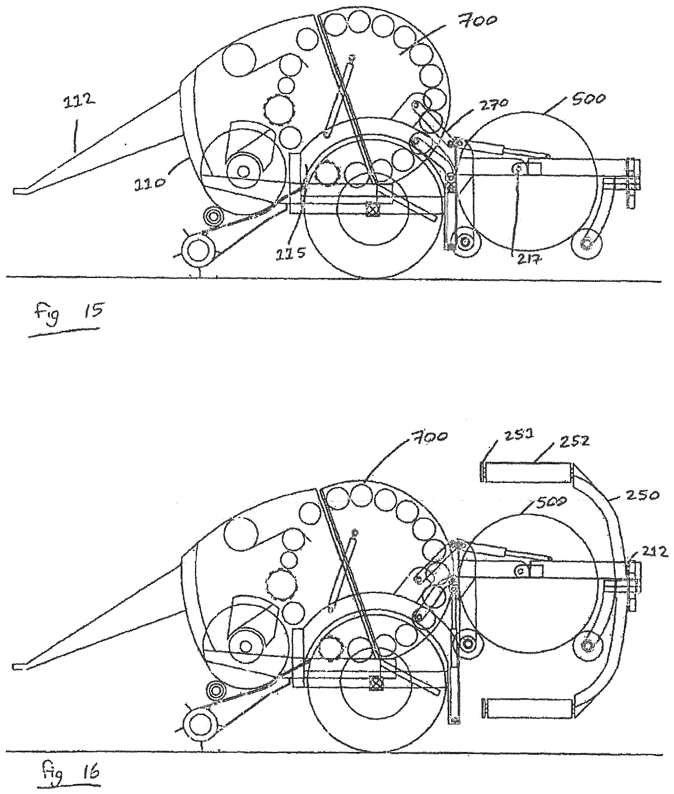

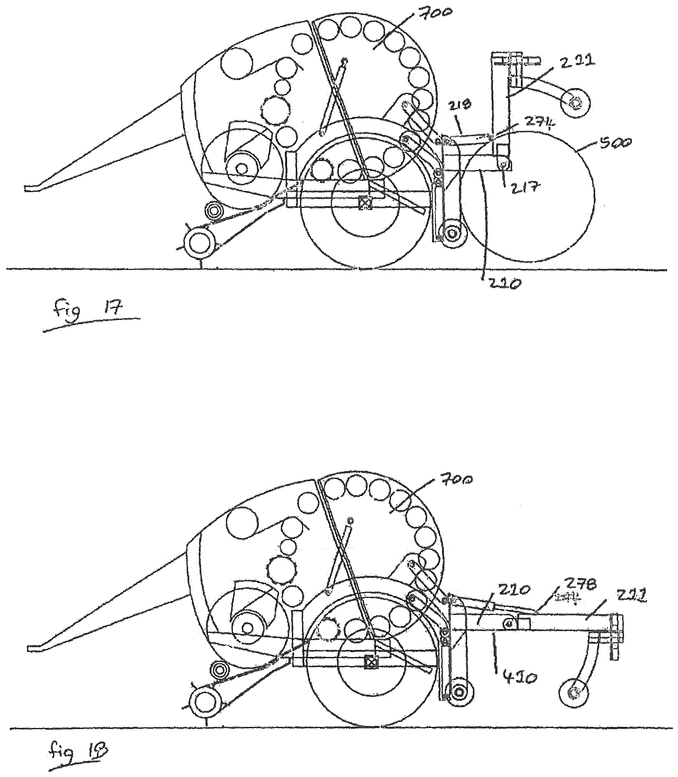

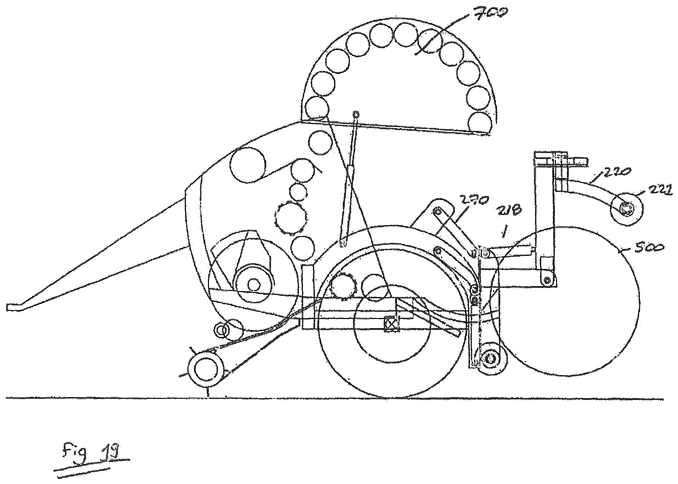

Fig. 13 to 19 show the same processes as Fig. 1 to 12 but with a conventional baler 700 instead of the continuous type baler 100

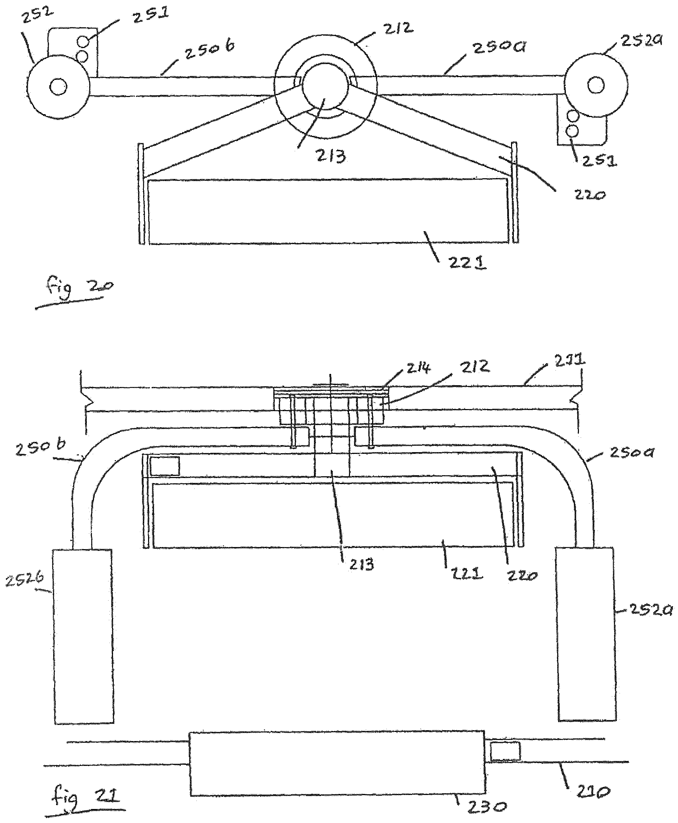

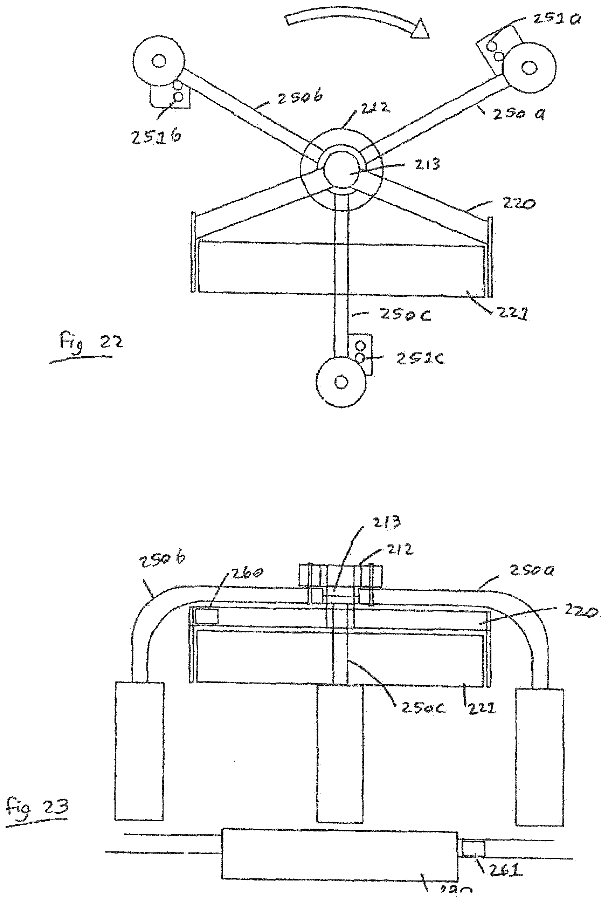

Fig. 20 and 21 show a two dispenser type wrapping systems while Fig. 22 to 25 show a three dispenser type wrapping system. The two dispenser type wrapping system shown in figures 20 and 21 has two plastic type material dispensers located at 180 degrees to each other. The dispensers rotate for x times in predominately in the vertical plane depending on the number of layers of plastic type material needs to be applied to the bale. When the wrapping sequence has completed the cycle the dispenser with the rolls of plastic type material 252a and 252b come to rest just off the horizontal axis while the cut and tie mechanism engage to tie and cut the plastic for the next cycle.

Fig. 22 to 26 show a three dispenser type wrapping system.

The three dispensers are located evenly at three locations at 120 degrees to each other. Again the dispenser will rotate for x times predominately around in the vertical plane. When the wrapping cycle has being completed, for ease of cutting and tying operations, the design allows for the dispensers to be located at approximately 180 degrees to each other. This is made possible by grouping two of the dispensers together while the third remains in a static position.

This action can be seen from Fig. 24 and Fig. 25. Fig. 24 shows the three arms during the wrapping cycle located 120 degrees to each other around in a circle. Dispenser arm 250b is in a fixed static position while dispenser arms 250a and 250c have pivot points 286 and 287 to the arms can be moved together for the cutting and tying mechanism to engage with the plastic. The arms are moved together at the end of the wrapping cycle by a cylinder type actuator 283, fixed to the dispenser arms at pivot points 284 and 285. The cylinder type actuator closes so the arms rotate on pivot points 286 and 287. This cycle of the arms being pulled together can be shown completed in Fig. 25. Fig. 25 shows the dispenser arms 250a and 250c grouped together, while dispenser arm 250b remains static. Importantly the grouped together dispenser arms meet at a location predominately 180 degrees to dispenser arms 250b. Due to this location the plastic type material from rolls 252a and 252c can be cut and tied by the cut and tie mechanism 410a while the plastic type material from roll 252b can be cut and tied by the cut and tie mechanism 410b. The cut and tie mechanisms in this case are shown located along the horizontal axis which means the dispenser arms must rotate to a point off the horizontal axis in order for the cut and tie mechanisms to engage the plastic from rolls 252b and then rolls 252a and 252c together.

Fig. 26 shows the position just prior to the next wrapping cycle begins. When the plastic is cut and tied by the cut and tie mechanisms 410a and 410b the dispenser arms rotate back around predominately to the horizontal axis at the start point for the next bale to be wrapped in a plastic material. As the next cycle begins, the cylinder type actuator 283 move the two dispenser arms 250a and 250c into the wrapping position as the three arms need to be spaced evenly, in this case 120 degrees to each other.

The number of dispenser can also be increased from three using the same design principles as shown here in these examples.

It is also important to note that grouping together of the arms is also important not only for the cutting and tying mechanisms but also to give a clear pathway for the bale to be transferred to the ground after wrapping cycle has finished. It is important the dispensers whatever the number are located predominately along the horizontal axis so when the pivoted up of the back roller occurs the dispenser arms is not obstructing the path of the wrapped bale passing onto the ground level. It is also important the dispenser arms are located predominately along the horizontal axis so the bales chamber door is not obstructed from opening up by a dispenser arm located in path.

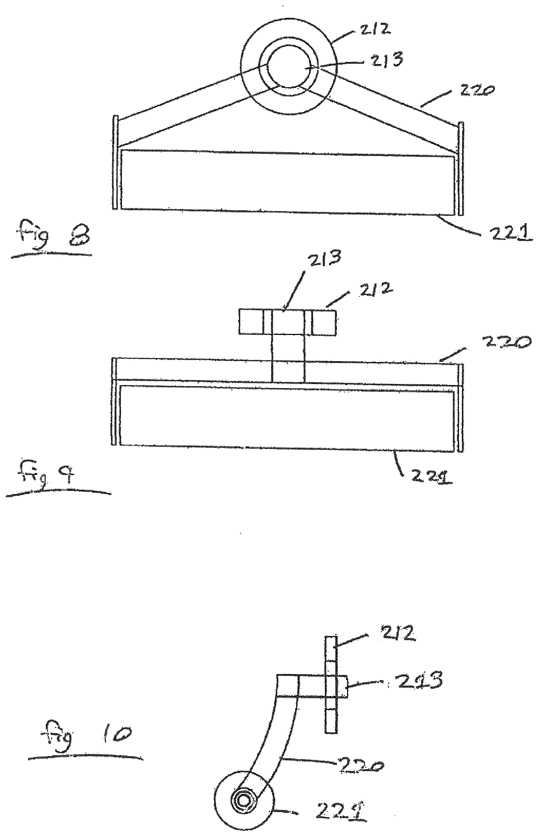

The structure for carrying the plastic dispenser is covered in detail in Fig. 8 to 10 and Fig. 20 and 21.

Fig. 8 to 10 mainly show the back roller structure with the slew ring type mechanism. The plastic dispensers are not shown on these drawings for clarity purposes. The main components shown on these drawings are the back roller 221, back roller framework 220, back roller framework support shaft 213 and the slew ring mechanism 212. Fig. 10 clearly shows the space left for the dispensers to freely rotate about 360 degrees. The space shown on the sectional side view is located between the back roller framework 220 and the slew ring mechanism 212. This configuration here makes it possible for the dispenser means to rotate in a 360 degree unobstructed means.

Fig. 20 and 21 have the dispenser means added to further show how the rotation of the dispensers is made possible. Fig. 21 shows a sectional plan view. From this view one can see the dispenser arms located in a space between the slew ring mechanism 212 and the back roller support framework 220 and the center support shaft 213 protruding through the slew ring mechanism 212 to support the back roller framework structure. Important as well to the set-up is the dimensional width of the back roller support framework is within the radius dimension of the dispenser arms, this allows the dispenser arms to rotate freely in rotation without and obstructions in its path.

Fig. 1 shows plastic or similar material dispenser arms 250 and dispensers 251. These arms and dispensers are not shown on the cross section side views Fig. 2 to 7 for clarity purposes. The bale wrapper may have different numbers of plastic dispensers depending on the design of the balers output.

The combined baler and bale wrapping apparatus 200 is of the type a two wheels apparatus and comprises of a main supporting frame 210 and 211, two supporting rollers 221 and 230 respectively. The plastic rolls 252 are attached to the dispensers 251 which in turn are attached to the dispenser arms 250 and rotate continuously in a 360 degrees rotation in a predominately vertical plane. The bale is passed from the baler onto the supporting table support rollers 221 and 230 respectively. The process of wrapping the bale starts by the bale being rotated by rollers 221 and 230 about the its central horizontal axis while the wrapping dispensers rotate at a proportional rotational speed to that of the rollers to ensure the plastic overlaps correctly. The wrapping dispensers rotate about a horizontal axis perpendicular to that of the bales rotation predominately in the vertical plane. The dispensers can also be designed to rotate off the vertical plane if found more efficient for example - the bale wrapping rollers 230 and 221 were not aligned to the horizontal axis, the back roller 221 could be at a higher level to 230, therefore the plastic dispensers could be rotated about to suit that requirement.

The speed of rotation of the bale wrappers rollers 230 and 221 will be controlled to rotate the bale at a proportional speed to the plastic dispenser arms 250 and dispensers 251 in order to ensure the correct over lapping to plastic as its being applied to the bale of fibrous material. For clarity, the drive means for the slew ring type mechanism which in turn drives the plastic dispenser arms which are connected to the slew is not shown. The drive means may be of the nature of a hydraulic motor with a sprocket driving the larger external ring gear of the slew ring. The drive means may also be of any other suitable device to operate the slew ring and in turn the slew ring type mechanism driving the plastic material dispenser arms.

Fig. 1 also comprises of the back roller 221, the roller framework 220 and the structural shaft 213 penetrating through the center of the slew ring type mechanism connecting to the plated slew ring structure 212 and the plated structure is then connected back to the main back framework 211. The drive means 260 for this back roller 221 may be of the hydraulic motor kind with a chain and sprocket attached. This particular drive means will power the roller 221 in one rotational direction only and the opposite rotational direction will be left free. This is necessary for when the bale is being passed from the wrapper so the roller will freely rotate with the bale 500 as the bale is rolling off the roller 230 onto the ground, this free movement of the roller 221 is necessary to prevent tearing or scorching of the wrapping material applied to the bale.

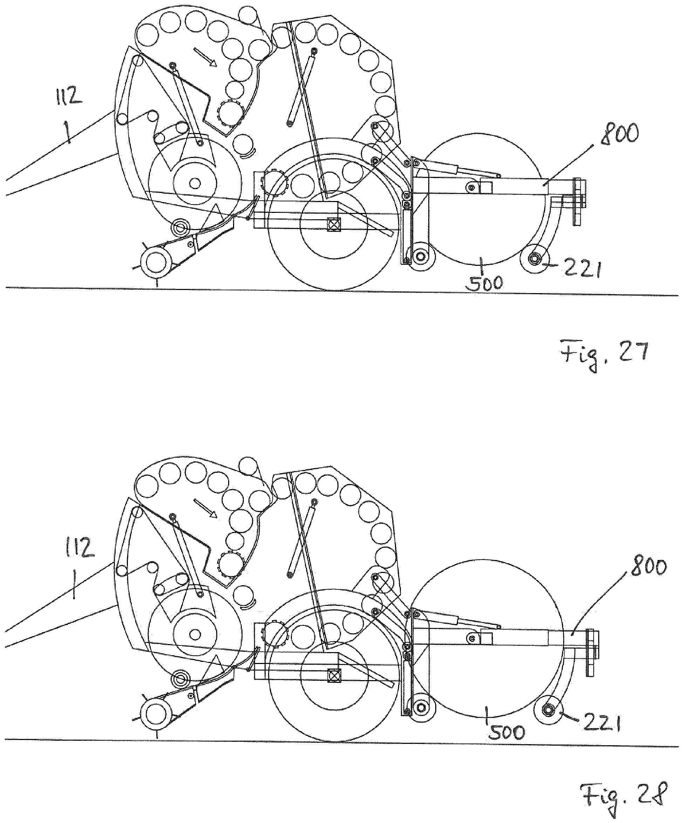

Referring to Fig. 27 to 30, a schematic representation of a combined baler and bale wrapping apparatus is shown, wherein the supporting frame of the bale wrapping apparatus is provided with a telescope section 800. With respect to most other features, the combined baler and bale wrapping apparatus shown in Fig. 27 to 30 is similar to the apparatus described above.

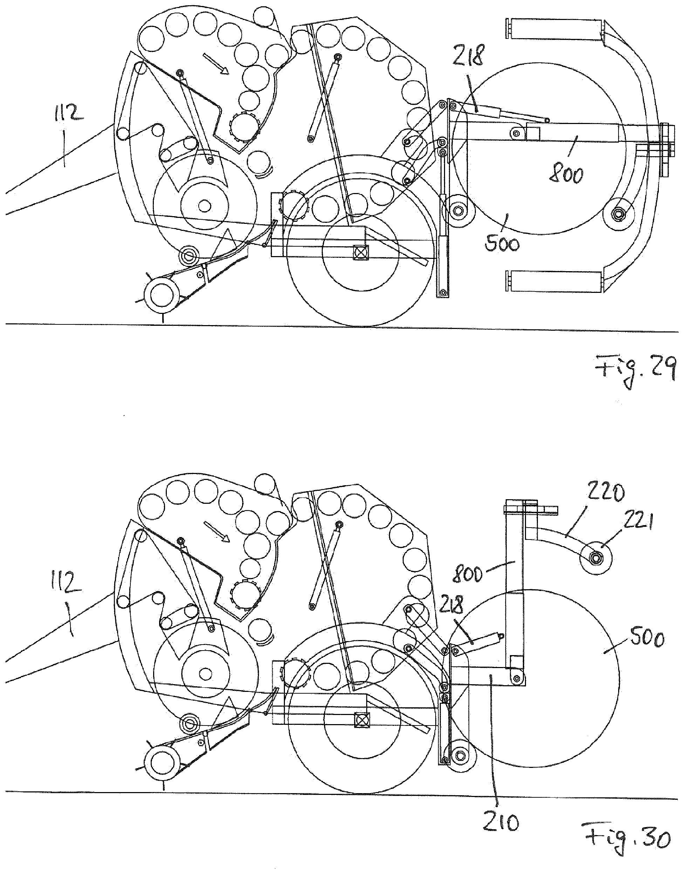

Fig. 28 shows a schematic representation of the combined baler and bale wrapping apparatus in Fig. 27, wherein the telescope section 800 is in an expanded or extended position. Fig. 29 depicts a schematic representation of the combined baler and bale wrapping apparatus in Fig. 27, wherein the supporting frame of the wrapping apparatus is lifted up in a horizontal direction. Fig. 30 shows a schematic representation of the combined baler and bale wrapping apparatus in Fig. 27, wherein the telescope section 800 is in a more expanded or extended position and the main back framework 211 of the supporting frame is pivoted upwardly.

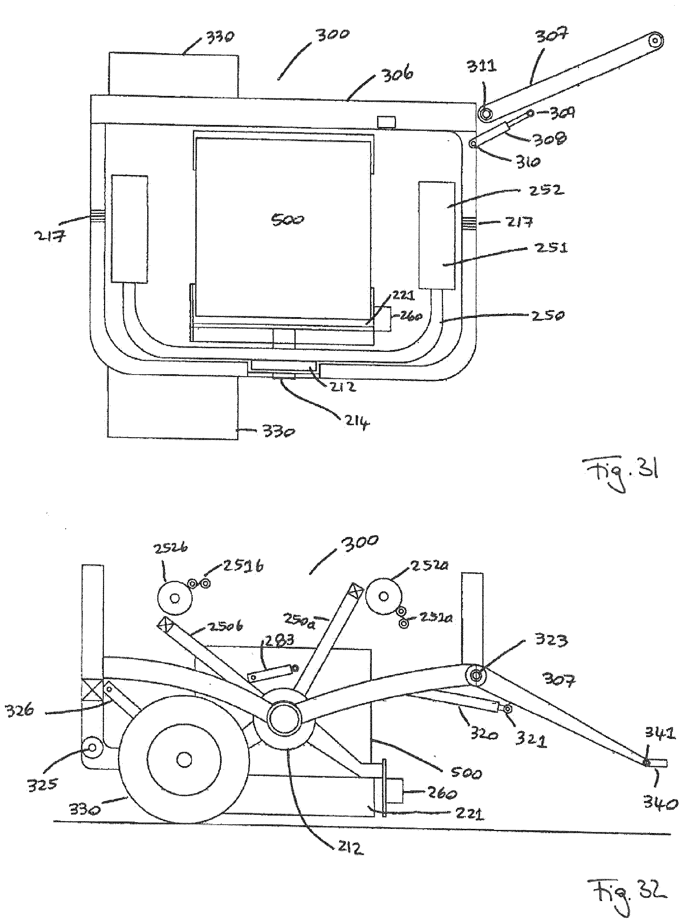

Referring to Fig. 31 to 36, schematic representations of a wrapping device are depicted. Different from the embodiments described above, the wrapping device which is not combined with a baler. Therefore, the wrapping device may also be referred to as standalone wrapping device. In Fig. 31 to 36 common features are referred to by the same reference numerals as in Fig. 1 to 30.

Fig. 31 shows a plan view of a wrapping apparatus not combined with a baler. Compared to the embodiments described above, for the wrapping apparatus the linkage system 270 on the combined unit is replaced with a frame 300 that moves up and down by pivot points 323, 325 powered by one or more hydraulic cylinders. The frame 300 also provides a link to the power unit. The wrapping apparatus may be attached to agricultural machine, e.g. a tractor, via a draw bar 307. An outline of the frame is depicted with 306. The wrapping apparatus is provided with wheels 330.

The principal of operation is similar to the operation of the wrapping device in the combined baler and wrapping apparatus described above. There is an additional step as the bale 500 needs to be collected by the pivoting rollers 221, 230, also the dispenser arms 250a, 250b need to rotate into a semi up position (see Fig. 32) to allow the bale 500 to pass under the dispensers 252a, 252b into the loading position between the pivoting rollers 221, 230 provided on the roller framework 220 with leg structures 290.

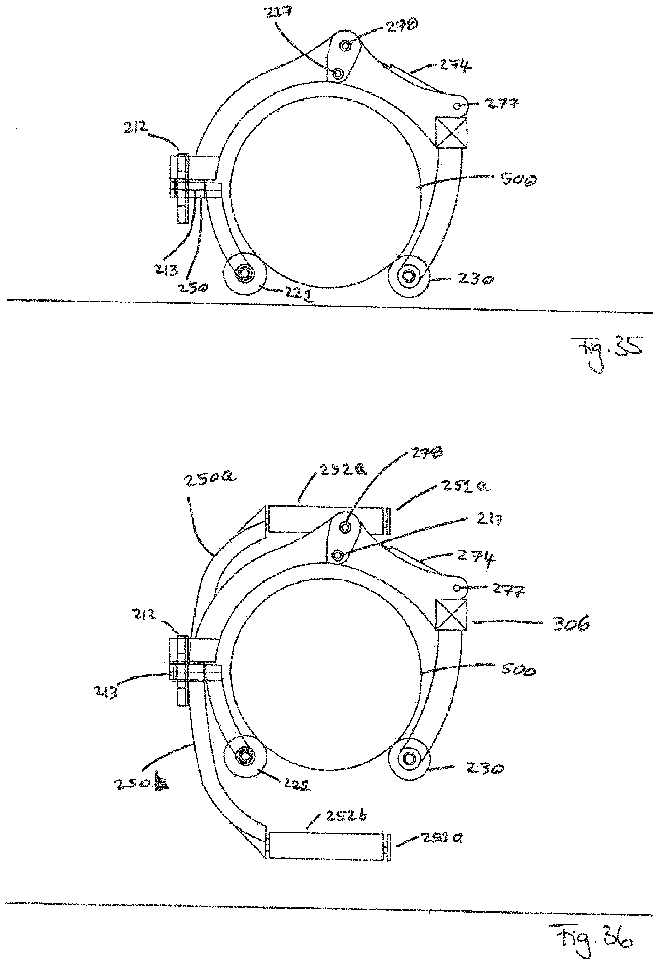

Fig. 32 shows a side elevation of the wrapping apparatus in Fig. 31. The outline of the frame 300 is shown along with the common features of the combined wrapper device 200 set described above. The wrapping apparatus is in a bale collect mode (with the frame 300 in the open position) with the dispenser arms 250 rotated in the up position to allow the bale 500 to pass under, and the wrapping apparatus is in a pivoted down position so the pivoting rollers 221, 230 are sufficiently at a close level to the ground level for the frame 300 to move the pivoting rollers 221, 230 under the circumference of the bale 500 prior to closing the pivoting rollers 221, 230 together (see Fig. 36).

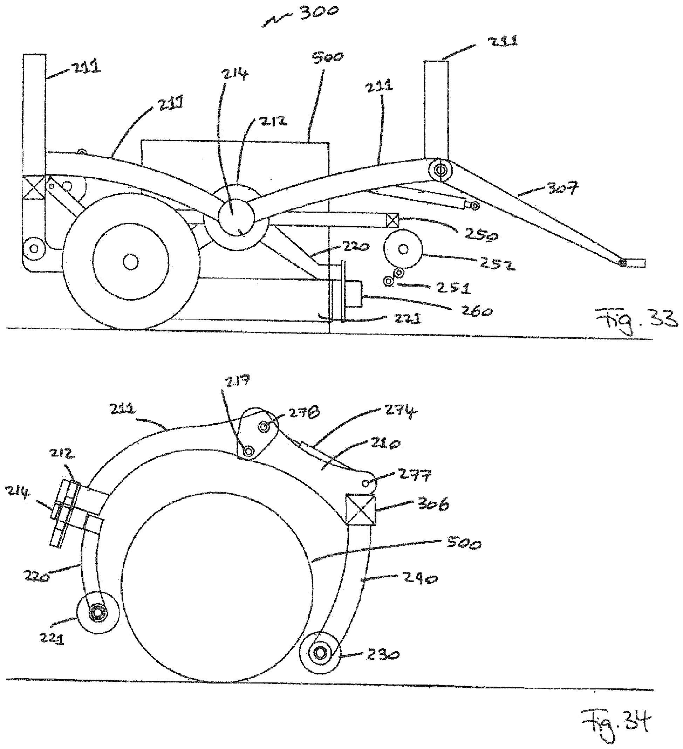

Fig. 33 shows a side elevation of the wrapping apparatus in Fig. 31 in a next stage. The pivoting rollers 221, 230 are closed together in tandem. The dispenser arms 250a, 250b are lowered into the wrap start position.

Fig. 34 shows a front sectional view of the wrapping apparatus in Fig. 31 in a bale receive and bale eject position. For simplicity, not all features are shown.

Fig. 35 shows a front sectional view of the wrapping apparatus in Fig. 31 with the frame 300 in a closed position rolling and pushing the bale 500 up onto rollers for raising into a wrap position.

Fig. 36 shows a front sectional view of the wrapping apparatus in Fig. 31 in a raised up position and in a bale wrapping mode. The bale 500 is lifted up. The dispensers 252a, 252b may rotate about the horizontal axis and vertical plane to apply plastic to the bale 500 of fibrous material.

It will of course be understood that aspects of the present disclosure have been described by way of example only and it should be appreciated that additions and / or modifications may be made thereto without departing from the scope of the present invention as claimed in the appended claims.

## Claims

1. A combined baler and bale wrapping apparatus (200), comprising
- a baler (100) configured to form a bale (500) from a fibrous material, and
- a bale wrapping apparatus provided with a supporting frame, wherein
- the supporting frame (210, 211) is moveable into a closed position in which the supporting frame (210, 211) is adapted to receive the bale (500) released from the baler (100) and support the bale (500) for wrapping with a wrapping material, and
- the supporting frame (210, 211) encircles a working space where the bale (500) is placed for wrapping at least on two sides in the closed position,
**characterized in that**
- an encircling part of the supporting frame (201, 211) is essentially extending in a horizontal plane, and
- the supporting frame (210, 211) is moveable between the closed position and an open position in which the supporting frame (210, 211) is configured to allow the bale (500) released from the baler (100) to pass through the supporting frame (210, 211) without being held in or by the supporting frame (210, 211).

2. The combined baler and bale wrapping apparatus (200) of claim 1, wherein the supporting frame (210, 211) is pivotable between the closed and open position.

3. The combined baler and bale wrapping apparatus (200) of claim 1 or 2, wherein the bale (500) released from the baler (100) is moved by gravity only into the bale wrapping apparatus.

4. The combined baler and bale wrapping apparatus (200) of one of the preceding claims, wherein the supporting frame (210, 211) comprises a first member (210) and a second member (211), the second member (211) being pivotably moveable relative to the first member (210).

5. The combined baler and bale wrapping apparatus (200) of one of the preceding claims, wherein the bale wrapping apparatus comprises at least one bale wrapping material dispenser (251; 252a, ..., 252c) for dispensing a bale wrapping material for applying around the bale (500).

6. The combined baler and bale wrapping apparatus (200) of claim 5, wherein the at least one bale wrapping material dispenser (251; 252a, ..., 252c) is mounted on at least one supporting arm connected to a rotatable structure mounted on the supporting frame (210, 211).

7. The combined baler and bale wrapping apparatus (200) of claim 6 and claim 4, wherein the at least one bale wrapping material dispenser (251; 252a, ..., 252c) is mounted on at least one supporting arm connected to a rotatable structure mounted on the second member (211) of the supporting frame (210, 211).

8. The combined baler and bale wrapping apparatus (200) of one of claims 5 to 7, wherein a framework of the bale wrapping apparatus is provided outside of a pathway of the at least one bale wrapping material dispenser (251; 252a, ..., 252c).

9. The combined baler and bale wrapping apparatus (200) of one of the claims 5 to 8, wherein at least one bale wrapping material dispenser (251; 252a, ..., 252c) is attached to arms which are supported by a support structure attached to an external ring of a slew ring.

10. The combined baler and bale wrapping apparatus (200) of one of the preceding claims, wherein the supporting frame (210, 211) comprises at least one bale supporting roller (221; 230) for supporting the bale (500) and for turning the bale (500) during bale wrapping.

11. The combined baler and bale wrapping apparatus (200) of claim 10 and claim 4, wherein the at least one supporting roller (221; 230) is provided on the second member (211) of the supporting frame (210, 211).

12. The combined baler and bale wrapping apparatus (200) of one of the preceding claims, wherein the bale wrapping apparatus comprises a linkage system (270) wherein the linkage system (270) provides essential vertical movement to enable the supporting frame (210, 211) in the closed position to move in a generally vertical plane, between a bale receive position and a bale wrapping position, the bale receive position being at a low level to receive the bale (500) by gravity from the baler (100) and the bale wrapping position being at a higher level to allow at least one bale wrapping material dispenser (251) to rotate around the horizontal axis on the vertical plane allowing the wrapping apparatus to be located closest to the baling apparatus thereby allowing bale transfer onto the bale wrapping apparatus by gravity.

13. The combined baler and bale wrapping apparatus (200) of one of the preceding claims, wherein a structure of the bale wrapping apparatus is connected to a main frame structure (110) of the baler (100).

14. The combined baler and bale wrapping apparatus (200) of claim 13, wherein the main frame structure of the baler (100) and the structure of the bale wrapping apparatus are connected together by a further linkage system operated by at least one actuator such that the bale wrapping apparatus is enabled to move up and down, substantially on the vertical plane without hindering the at least one bale wrapping material dispenser (251; 252a, .., 252c).

15. The combined baler and bale wrapping apparatus (200) of one of the preceding claims, wherein a structure framework for carrying the bale wrapping apparatus is provided over wheels of the baler (100).

16. The combined baler and bale wrapping apparatus (200) of one of the preceding claims, wherein a ramp framework is provided which is functionally allocated to a chamber door of the baler (100) to provide a smooth pathway for the bale (500) to move onto the supporting frame (210, 211) of the bale wrapping apparatus.

17. A construction kit for a bale wrapping apparatus for a combined baler and wrapping apparatus according to at least one of the preceding claims, comprising construction elements for a supporting frame (210, 211), wherein the supporting frame (210, 211), when mounted to a baler (100), is movable between a closed position in which the supporting frame (210, 211) is adapted to receive a bale (500) released from the baler (100) and support the bale (500) for wrapping with a wrapping material, and an open position in which the supporting frame (210, 211) is configured to allow the bale (500) released from the baler (100) to pass through the supporting frame (210, 211) without being held in or by the supporting frame (210, 211), and wherein the supporting frame (210, 211), at least in the closed position, encompasses a working space where the bale (500) is placed for wrapping at least on two sides by supporting frame members, wherein an encircling part of the supporting frame (201, 211) is essentially extending in a horizontal plane.

18. An agriculture vehicle, carrying a bale wrapping apparatus built with the construction kit of claim 17.

## Patentansprüche

1. Kombinierte Ballenpresse und Ballenwickelvorrichtung (200) mit:
- einer Ballenpresse (100), die eingerichtet ist, aus einem faserigen Material einen Ballen (500) zu formen, und
- einer Ballenwickelvorrichtung, die mit einem Tragerahmen bereitgestellt ist, wobei
- der Tragerahmen (210, 211) in eine geschlossene Stellung bewegbar ist, in welcher der Tragerahmen (210, 211) eingerichtet ist, den Ballen (500) aufzunehmen, der von der Ballenpresse (100) freigegeben wird, und den Ballen (500) beim Einwickeln mit einem Wickelmaterial zu stützen, und
- der Tragerahmen (210, 211) einen Arbeitsraum umläuft, in dem der Ballen (500) platziert wird, um in der geschlossenen Stellung auf mindestens zwei Seiten eingewickelt zu werden,
**dadurch gekennzeichnet, dass**
- ein Umlaufteil des Tragerahmens (201, 211) sich im Wesentlichen in einer horizontalen Ebene erstreckt, und
- der Tragerahmen (210, 211) zwischen der geschlossenen Stellung und einer offenen Stellung bewegbar ist, in welcher der Tragerahmen (210, 211) eingerichtet ist zu ermöglichen, dass der Ballen (500) von der Ballenpresse (100) freigegeben wird, um sich durch den Tragerahmen (210, 211) hindurch zu bewegen, ohne im oder durch den Tragerahmen (210, 211) festgehalten zu werden.

2. Kombinierte Ballenpresse und Ballenwickelvorrichtung (200) nach Anspruch 1, wobei der Tragerahmen (210, 211) zwischen der offenen und der geschlossenen Stellung schwenkbar ist.

3. Kombinierte Ballenpresse und Ballenwickelvorrichtung (200) nach Anspruch 1 oder 2, wobei der Ballen (500), der von der Ballenpresse (100) freigegeben wird, allein durch die Schwerkraft in die Ballenwickelvorrichtung hinein bewegt wird.

4. Kombinierte Ballenpresse und Ballenwickelvorrichtung (200) nach einem der vorhergehenden Ansprüche, wobei der Tragerahmen (210, 211) ein erstes Bauteil (210) und ein zweites Bauteil (211) aufweist, wobei das zweite Bauteil (211) bezüglich des ersten Bauteils (210) schwenkbar beweglich ist.

5. Kombinierte Ballenpresse und Ballenwickelvorrichtung (200) nach einem der vorhergehenden Ansprüche, wobei die Ballenwickelvorrichtung mindestens einen Ballenwickelmaterialausgeber (251; 252a, ..., 252c) aufweist, um ein Ballenwickelmaterial zur Anwendung um den Ballen (500) herum auszugeben.

6. Kombinierte Ballenpresse und Ballenwickelvorrichtung (200) nach Anspruch 5, wobei der mindestens eine Ballenwickelmaterialausgeber (251; 252a, ..., 252c) auf mindestens einem Tragearm montiert ist, der mit einer drehbaren Konstruktion verbunden ist, die auf dem Tragerahmen (210, 211) montiert ist.

7. Kombinierte Ballenpresse und Ballenwickelvorrichtung (200) nach Anspruch 6 und Anspruch 4, wobei der mindestens eine Ballenwickelmaterialausgeber (251; 252a, ..., 252c) auf mindestens einem Tragearm montiert ist, der mit einer drehbaren Konstruktion verbunden ist, die auf dem zweiten Bauteil (211) des Tragerahmens (210, 211) montiert ist.

8. Kombinierte Ballenpresse und Ballenwickelvorrichtung (200) nach einem der Ansprüche 5 bis 7, wobei ein Rahmen der Ballenwickelvorrichtung außerhalb eines Weges des mindestens einen Ballenwickelmaterialausgebers (251; 252a, ..., 252c) bereitgestellt ist.

9. Kombinierte Ballenpresse und Ballenwickelvorrichtung (200) nach einem der Ansprüche 5 bis 8, wobei der mindestens eine Ballenwickelmaterialausgeber (251; 252a, ..., 252c) an Armen befestigt ist, die durch eine Tragekonstruktion unterstützt werden, die an einem äußeren Ring eines Drehkranzes befestigt ist.

10. Kombinierte Ballenpresse und Ballenwickelvorrichtung (200) nach einem der vorhergehenden Ansprüche, wobei der Tragerahmen (210, 211) mindestens eine Ballentragewalze (221; 230) zum Tragen des Ballens (500) und zum Herumdrehen des Ballens (500) während des Ballenwickelns aufweist.

11. Kombinierte Ballenpresse und Ballenwickelvorrichtung (200) nach Anspruch 10 und Anspruch 4, wobei die mindestens eine Tragewalze (221; 230) auf dem zweiten Bauteil (211) des Tragerahmens (210, 211) bereitgestellt ist.

12. Kombinierte Ballenpresse und Ballenwickelvorrichtung (200) nach einem der vorhergehenden Ansprüche, wobei die Ballenwickelvorrichtung ein Koppelungssystem (270) aufweist, wobei das Koppelungssystem (270) eine im Wesentlichen vertikale Bewegung bereitstellt, um zu ermöglichen, dass sich der Tragerahmen (210, 211) in der geschlossenen Stellung in einer im Wesentlichen vertikalen Ebene zwischen einer Ballenaufnahmestellung und einer Ballenwickelstellung bewegt, wobei die Ballenaufnahmestellung in einer geringen Höhe liegt, um den Ballen (500) mittels der Schwerkraft von der Ballenpresse (100) aus zu empfangen, und die Ballenwickelstellung in einer größeren Höhe liegt, um es mindestens einem Ballenwickelmaterialausgeber (251) zu ermöglichen, sich in der vertikalen Ebene um die horizontale Achse herum zu drehen, was ermöglicht, dass die Wickelvorrichtung möglichst nahe an der Ballenpressvorrichtung angeordnet wird, wodurch die Ballenübergabe auf die Ballenwickelvorrichtung durch die Schwerkraft ermöglicht wird.

13. Kombinierte Ballenpresse und Ballenwickelvorrichtung (200) nach einem der vorhergehenden Ansprüche, wobei eine Konstruktion der Ballenwickelvorrichtung mit einer Hauptrahmenkonstruktion (110) der Ballenpresse (100) verbunden ist.

14. Kombinierte Ballenpresse und Ballenwickelvorrichtung (200) nach Anspruch 13, wobei die Hauptrahmenkonstruktion der Ballenpresse (100) und die Konstruktion der Ballenwickelvorrichtung miteinander durch ein weiteres Koppelungssystem verbunden sind, das durch mindestens ein Stellglied derart betrieben wird, dass es der Ballenwickelvorrichtung ermöglicht wird, sich weitgehend in der vertikalen Ebene nach oben und unten zu bewegen, ohne den mindestens einen Ballenwickelmaterialausgeber (251; 252a, ..., 252c) zu behindern.

15. Kombinierte Ballenpresse und Ballenwickelvorrichtung (200) nach einem der vorhergehenden Ansprüche, wobei über Rädern der Ballenpresse (100) ein Konstruktionsrahmen zum Tragen der Ballenwickelvorrichtung vorgesehen ist.

16. Kombinierte Ballenpresse und Ballenwickelvorrichtung (200) nach einem der vorhergehenden Ansprüche, wobei ein Rampenrahmen vorgesehen ist, der funktional an einer Kammertür der Ballenpresse (100) angeordnet ist, um für den Ballen (500) einen ebenen Weg zur Bewegung auf den Tragerahmen (210, 211) der Ballenwickelvorrichtung bereitzustellen.

17. Bausatz für eine Ballenwickelvorrichtung für eine kombinierte Ballenpresse und Wickelvorrichtung nach mindestens einem der vorhergehenden Ansprüche mit Konstruktionselementen für einen Tragerahmen (210, 211), wobei der Tragerahmen (210, 211), wenn er auf einer Ballenpresse (100) montiert ist, bewegbar ist zwischen einer geschlossenen Stellung, in welcher der Tragerahmen (210, 211) eingerichtet ist, einen Ballen (500) aufzunehmen, der von der Ballenpresse (100) freigegeben wird, und den Ballen (500) beim Einwickeln mit einem Wickelmaterial zu unterstützen, und einer offenen Stellung, in welcher der Tragerahmen (210, 211) eingerichtet ist zu ermöglichen, dass der Ballen (500) von der Ballenpresse (100) freigegeben wird, um sich durch den Tragerahmen (210, 211) hindurchzubewegen, ohne im oder durch den Tragerahmen (210, 211) festgehalten zu werden, und wobei der Tragerahmen (210, 211) mindestens in der geschlossenen Stellung einen Arbeitsraum durch Tragerahmenbauteile umgreift, in dem der Ballen (500) platziert wird, um auf mindestens zwei Seiten eingewickelt zu werden, wobei sich ein Umlaufteil des Tragerahmens (201, 211) im Wesentlichen in einer horizontalen Ebene erstreckt.

18. Landwirtschaftliches Fahrzeug, das eine Ballenwickelvorrichtung mitführt, die mit dem Bausatz nach Anspruch 17 aufgebaut ist.

## Revendications

1. Appareil combiné de formation de balles et d'emballage de balles (200) comprenant :
- une presse à balles (100) configurée pour former une balle (500) à partir de matières fibreuses, et
- un appareil d'emballage de balles doté d'un cadre de support, dans lequel
- le cadre de support (210, 211) est déplaçable dans une position fermée où le cadre de support (210, 211) est adapté pour recevoir la balle (500) relâchée par la presse à balles (100) et supporter la balle (500) pour l'emballage avec un matériau d'emballage, et
- le cadre de support (210, 211) encercle un espace de travail où la balle (500) est placée pour l'emballage, au moins sur deux côtés, dans la position fermée, **caractérisé en ce**
- **qu'**une partie d'encerclement du cadre de support (201, 211) s'étend sensiblement dans un plan horizontal, et
- **que** le cadre de support (210, 211) est déplaçable entre la position fermée et une position ouverte où le cadre de support (210, 211) est configuré pour permettre à la balle (500) relâchée par la presse à balles (100) de passer à travers le cadre de support (210, 211) sans être retenue dans le cadre de support (210, 211) ou par celui-ci.

2. Appareil combiné de formation de balles et d'emballage de balles (200) selon la revendication 1, dans lequel le cadre de support (210, 211) peut pivoter entre la position fermée et ouverte.

3. Appareil combiné de formation de balles et d'emballage de balles (200) selon la revendication 1 ou 2, dans lequel la balle (500) relâchée par la presse à balles (100) est déplacée seulement par la gravité dans l'appareil d'emballage de balles.

4. Appareil combiné de formation de balles et d'emballage de balles (200) selon l'une des revendications précédentes, dans lequel le cadre de support (210, 211) comprend un premier élément (210) et un deuxième élément (211), le deuxième élément (211) pouvant se déplacer de façon pivotante par rapport au premier élément (210).

5. Appareil combiné de formation de balles et d'emballage de balles (200) selon l'une des revendications précédentes, dans lequel l'appareil d'emballage de balles comprend au moins un distributeur de matériau d'emballage de balles (251 ; 252a, ..., 252c) pour distribuer un matériau d'emballage de balle à appliquer autour de la balle (500).

6. Appareil combiné de formation de balles et d'emballage de balles (200) selon la revendication 5, dans lequel l'au moins un distributeur de matériau d'emballage de balles (251 ; 252a, ..., 252c) est monté sur au moins un bras de support relié à une structure rotative montée sur le cadre de support (210, 211).

7. Appareil combiné de formation de balles et d'emballage de balles (200) selon la revendication 6 et la revendication 4, dans lequel l'au moins un distributeur de matériau d'emballage de balles (251 ; 252a, ..., 252c) est monté sur au moins un bras de support relié à une structure rotative montée sur le deuxième élément (211) du cadre de support (210, 211).

8. Appareil combiné de formation de balles et d'emballage de balles (200) selon l'une des revendications 5 à 7, dans lequel une ossature de l'appareil d'emballage de balles est fournie à l'extérieur d'un chemin de l'au moins un distributeur de matériau d'emballage de balles (251 ; 252a, ..., 252c).

9. Appareil combiné de formation de balles et d'emballage de balles (200) selon l'une des revendications 5 à 8, dans lequel au moins un distributeur de matériau d'emballage de balles (251 ; 252a, ..., 252c) est attaché à des bras qui sont supportés par une structure de support attachée à un anneau externe d'une couronne de rotation.

10. Appareil combiné de formation de balles et d'emballage de balles (200) selon l'une des revendications précédentes, dans lequel le cadre de support (210, 211) comprend au moins un rouleau de support de balle (221 ; 230) pour supporter la balle (500) et pour tourner la balle (500) pendant l'emballage de la balle.

11. Appareil combiné de formation de balles et d'emballage de balles (200) selon la revendication 10 et la revendication 4, dans lequel l'au moins un rouleau de support (221 ; 230) est fourni sur le deuxième élément (211) du cadre de support (210, 211).

12. Appareil combiné de formation de balles et d'emballage de balles (200) selon l'une des revendications précédentes, dans lequel l'appareil d'emballage de balles comprend un système de liaison (270) où le système de liaison (270) fournit un déplacement essentiellement vertical pour permettre au cadre de support (210, 211) dans la position fermée de se déplacer dans un plan globalement vertical, entre une position de réception de balle et une position d'emballage de balle, la position de réception de balle étant à un niveau bas pour recevoir la balle (500) grâce à la gravité de la part de la presse à balles (100) et la position d'emballage de balle étant à un niveau plus élevé pour permettre à au moins un distributeur de matériau d'emballage de balles (251) de tourner autour de l'axe horizontal sur un plan vertical en permettant à l'appareil d'emballage d'être situé le plus près de l'appareil de formation de balles en permettant de la sorte un transfert de balle sur l'appareil d'emballage de balles grâce à la gravité.

13. Appareil combiné de formation de balles et d'emballage de balles (200) selon l'une des revendications précédentes, dans lequel une structure de l'appareil d'emballage de balles est reliée à une structure de cadre principale (110) de la presse à balles (100).

14. Appareil combiné de formation de balles et d'emballage de balles (200) selon la revendication 13, dans lequel la structure de cadre principale de la presse à balles (100) et la structure de l'appareil d'emballage de balles sont reliées ensemble par un autre système de liaison actionné par au moins un actionneur de sorte que l'appareil d'emballage de balles est autorisé à se déplacer vers le haut et le bas, sensiblement sur le plan vertical, sans gêner l'au moins un distributeur de matériau d'emballage de balles (251 ; 252a, ..., 252c).

15. Appareil combiné de formation de balles et d'emballage de balles (200) selon l'une des revendications précédentes, dans lequel une ossature de structure pour porter l'appareil d'emballage de balles est fournie par-dessus des roues de la presse à balles (100).

16. Appareil combiné de formation de balles et d'emballage de balles (200) selon l'une des revendications précédentes, dans lequel une ossature de rampe est fournie, laquelle est allouée fonctionnellement à une porte de chambre de la presse à balles (100) pour fournir un chemin régulier pour la balle (500) pour se déplacer sur le cadre de support (210, 211) de l'appareil d'emballage de balles.

17. Kit de construction pour un appareil d'emballage de balles pour un appareil combiné de formation de balles et d'emballage de balles selon l'une au moins des revendications précédentes, comprenant des éléments de construction pour un cadre de support (210, 211), dans lequel le cadre de support (210, 211), lorsque monté sur une presse à balles (100), peut se déplacer entre une position fermée où le cadre de support (210, 211) est adapté pour recevoir une balle (500) relâchée par la presse à balles (100) et supporter la balle (500) pour l'emballer avec un matériau d'emballage, et une position ouverte où le cadre de support (210, 211) est configuré pour permettre à la balle (500) relâchée par la presse à balles (100) de passer à travers le cadre de support (210, 211) sans être retenue dans le cadre de support (210, 211), ou par celui-ci, et dans lequel le cadre de support (210, 211), au moins dans la position fermée, entoure un espace de travail où la balle (500) est placée pour l'emballage, au moins sur deux côtés grâce à des éléments de cadre de support, dans lequel une partie d'encerclement du cadre de support (201, 211) s'étend sensiblement dans un plan horizontal.

18. Véhicule agricole portant un appareil d'emballage de balles construit avec le kit de construction de la revendication 17.
